# EUROPEAN PATENT APPLICATION

(11) **EP 4 227 002 A1**
(43) Date of publication of application: **16.08.2023**
(21) Application number: 22155925.5
(22) Date of filing: 09.02.2022
(51) Int. Cl.: B01J 23/20, B01J 23/30, B01D 53/94, B01J 37/00, B01J 37/02

(54) **VANADIUM-FREE TITANIA-BASED SCR CATALYST ARTICLE**

(71) Applicant: Johnson Matthey Catalysts (Germany) GmbH, 96257 Redwitz an der Rodach (DE)
(72) Inventor: The designation of the inventor has not yet been filed
(74) Representative: Wilson, Nicola Ann

(57) **Abstract**

The present invention relates to a titania-based selective catalytic reduction (SCR) catalyst article which shows comparable or better performance to those which contain vanadium. In particular, the invention relates to the provision of a titania-based SCR catalyst article comprising ceria and niobia and to methods of making these catalysts.

## Description

The present invention relates to a titania-based selective catalytic reduction (SCR) catalyst article which shows comparable or better performance to those which contain vanadium, in order to meet increasingly strict regulatory requirements. In particular, the invention relates to the provision of a titania-based SCR catalyst article comprising ceria and niobia and to methods of making these catalysts.

NOx (including nitric oxide (NO), nitrogen dioxide (NO₂) and/or nitrous oxide (N₂O)) is contained in exhaust gases, such as from internal combustion engines (e.g. in automobiles and trucks), from combustion installations (e.g. power stations heated by natural gas, oil, or coal), and from nitric acid production plants.

Various treatment methods have been used for the treatment of NOx-containing gas mixtures to decrease atmospheric pollution. One type of treatment involves catalytic reduction of nitrogen oxides. The reduction of NOₓ to N₂ in a lean burn exhaust gas, such as that created by diesel engines or by coal-fired engines, is particularly problematic because the exhaust gas contains enough oxygen to favor oxidative reactions instead of reduction. NOx can be reduced in diesel exhausts, however, via a selective reduction process wherein ammonia or an ammonia precursor is used as a reducing agent. In the selective reduction process, a high degree of nitrogen oxide removal can be achieved with a small amount of reducing agent.

The selective reduction process is referred to as an SCR (Selective Catalytic Reduction) process. The SCR process uses catalytic reduction of nitrogen oxides with a reductant (e.g. ammonia) in the presence of atmospheric oxygen, resulting in the formation predominantly of elemental nitrogen and water:

4NO + 4NH₃+O₂ → 4N₂ + 6H₂O (standard SCR reaction)

2NO₂ + 4NH₃ → 3N₂ + 6H₂O (slow SCR reaction)

NO + NO₂ + NH3 → 2N₂ + 3H₂O (fast SCR reaction)

Catalysts employed in the SCR process ideally should be able to retain good catalytic activity over a wide range of temperature conditions of use, for example, 200°C to 600°C or higher, under hydrothermal conditions. SCR catalysts are commonly employed in hydrothermal conditions, such as during the regeneration of a soot filter, a component of the exhaust gas treatment system used for the removal of particles.

Catalytic converters for use in motor-vehicles typically comprise an extruded ceramic honeycomb monolith that is provided with channels for the through-flow of exhaust gases. The channels of the monolith may be coated with a catalytically active material (known as a "washcoat"). Alternatively, the extruded monolith itself is formed of a catalytically active material (referred to as an "all-active extrudate" or "extruded catalyst").

WO 2013/017873 discloses an extruded honeycomb catalyst for nitrogen oxide reduction according to the selective catalytic reduction (SCR) method in exhaust gases from motor vehicles. Extruded honeycomb catalysts are one-piece, monolithic objects, which have a plurality of channels through which the exhaust gas flows during operation. These channels typically have an opening width of just a few millimetres. The webs delimiting the individual channels also typically have a width of just 300 µm. In extruded honeycomb catalysts, in which the solid material is catalytically active, a high proportion by volume of the solid body consists of catalytically active components. The result of this is that any modifications of the catalytic components, for example to make adaptations to different requirements and in general to pursue refinements, have a critical effect on extrudability.

The catalyst of WO 2013/017873 relies upon an extruded active carrier in honeycomb form and a washcoat coating comprising a second SCR catalytically active component being applied to the extruded body. The carrier and the washcoat are each selected from (i) vanadium catalyst with vanadium as catalytically active component; (ii) mixed-oxide catalyst with one or more oxides; and (iii) an Fe- or a Cu-zeolite catalyst. However, in some jurisdictions, the use of vanadium in catalytic converters is restricted.

Alternative, known SCR (selective catalytic reduction) catalysts include molecular sieves. Useful molecular sieves include crystalline or quasi-crystalline materials which can be, for example aluminosilicates (zeolites) or silicoaluminophosphates (SAPOs). Such molecular sieves are constructed of repeating SiO₄, AlO₄, and optionally PO₄ tetrahedral units linked together, for example in rings, to form frameworks having regular intra-crystalline cavities and channels of molecular dimensions. The specific arrangement of tetrahedral units (ring members) gives rise to the molecular sieve's framework, and by convention, each unique framework is assigned a unique three-letter code (e.g. "CHA") by the International Zeolite Association (IZA). Examples of molecular sieve frameworks that are known SCR catalysts include Framework Type Codes CHA (chabazite), BEA (beta), MOR (mordenite), AEI, MFI and LTA.

WO 2018/178643 discloses an SCR catalyst based on a mixture of the H-form of an aluminosilicate mordenite zeolite (MOR) and an iron-promoted aluminosilicate MFI zeolite; together with a vanadium oxide supported on a metal oxide support, which is titania, silica-stabilized titania or a mixture of both titania and silica-stabilized titania.

WO 2019/069232 discloses a ceria-based SCR catalyst which can be doped with, amongst others, Nb. WO 2015/101776 similarly discloses doped ceria.

Accordingly, it is an object of the present invention to provide a catalyst article having comparable or better SCR performance, particularly at high temperature, compared to known vanadium-containing SCR catalysts, or at least to tackle problems associated therewith in the prior art, or provide a commercially viable alternative thereto.

According to a first aspect there is provided a selective catalytic reduction (SCR) catalyst article comprising a vanadium-free extruded titania substrate comprising:
a titania-based portion, a filler portion and, optionally, a zeolitic portion, wherein:
(a) the titania-based portion comprises the following elements on an oxide basis, based on the weight of the substrate:
   (i) Nb in an amount of 1 to 10wt%;
   (ii) Ce in an amount of 5 to 15wt%;
   (iii) W in an amount of 0 to 10wt%, preferably from 1 to 10wt%;
   and, optionally,
   (iv) Fe in an amount of 0 to 5wt%, preferably from 1 to 5wt%;
   (v) Zr in an amount of 0 to 5wt%, preferably from 1 to 5wt%;
   (vi) Si in an amount of 0 to 5wt%, preferably from 1 to 5wt%;
   (vii) La in an amount of 0 to 5wt%, preferably from 1 to 5wt%;
   (viii) Er in an amount of 0 to 5wt%, preferably from 1 to 5wt%;
   (ix) Nd in an amount of 0 to 5wt%, preferably from 1 to 5wt%;
   wherein the balance is at least 60wt% Ti;
(b) the filler portion is in an amount of 1 to 20wt%, based on the weight of the substrate, and
(c) the optional zeolitic portion comprises one or more zeolitic SCR components in a total amount of up to 20wt%, based on the weight of the substrate.

According to a further aspect there is provided a selective catalytic reduction (SCR) catalyst article comprising a substrate having a vanadium-free titania-based washcoat layer thereon, the washcoat layer comprising:
a titania-based portion, a binder portion and, optionally, a zeolitic portion, wherein:
(a) the titania-based portion comprises the following elements on an oxide basis, based on the weight of the washcoat:
   (i) Nb in an amount of 1 to 10wt%;
   (ii) Ce in an amount of 5 to 15wt%;
   (iii) W in an amount of 0 to 10wt%, preferably from 1 to 10wt%;
   and, optionally,
   (iv) Fe in an amount of 0 to 5wt%, preferably from 1 to 5wt%;
   (v) Zr in an amount of 0 to 5wt%, preferably from 1 to 5wt%;
   (vi) Si in an amount of 0 to 5wt%, preferably from 1 to 5wt%;
   (vii) La in an amount of 0 to 5wt%, preferably from 1 to 5wt%;
   (viii) Er in an amount of 0 to 5wt%, preferably from 1 to 5wt%;
   (ix) Nd in an amount of 0 to 5wt%, preferably from 1 to 5wt%;
   wherein the balance is at least 60wt% Ti;
(b) the binder portion is in an amount of 1 to 20wt%, based on the weight of the washcoat, and
(c) the optional zeolitic portion comprises one or more zeolitic SCR components in a total amount of up to 20wt%, based on the weight of the washcoat.

The present disclosure will now be described further. In the following passages different aspects/embodiments of the disclosure are defined in more detail. Each aspect/embodiment so defined may be combined with any other aspect/embodiment or aspects/embodiments unless clearly indicated to the contrary. In particular, any feature indicated as being preferred or advantageous may be combined with any other feature or features indicated as being preferred or advantageous. It is intended that the features disclosed in relation to the product may be combined with those disclosed in relation to the method and vice versa.

In this disclosure, all weight percentages in the titania-based portions are provided on an oxide basis. That is, the range of 1 to 10wt% Nb on an oxide basis means that there are oxides of Nb present in an amount of 1 to 10wt% of the catalyst (i.e. Nb₂O₅). The amounts of the different elements can be quantitatively determined based on XRF techniques, measured against a known calibration standard as appropriate and then reported on the basis of the most stable oxide.

The weight percentages for the filler portion and the optional zeolitic portion are by weight of the extruded substrate or the washcoat layer, as appropriate.

As will be appreciated, both of the foregoing aspects relate to the provision of an SCR catalyst article having the same catalytically active composition. Whereas in the first aspect this is provided as an all-active extruded composition, in the further aspect it is provided as a washcoat composition coated on a carrier substrate. Accordingly, all relevant preferable features may be readily applied to both aspects. In both aspects it is the same active components which are providing improved catalytic performance. It is noted that the composition is well suited to extrusion or to inclusion in a washcoat.

The first aspect provides a selective catalytic reduction (SCR) catalyst article comprising a vanadium-free extruded titania substrate. By "vanadium free" it is meant that the catalyst does not intentionally comprise any vanadium, such that the catalyst comprises less than 1wt%, more preferably less than 0.1wt% and preferably essentially no vanadium.

The catalyst article comprises a titania-based portion, a filler portion and, optionally, a zeolitic portion, as discussed below. Preferably the catalyst article consists of the titania-based portion, the filler portion and, optionally, the zeolitic portion.

The titania-based portion is predominantly composed of titania. The titania-based portion of the catalyst article comprises Nb in an amount of 1 to 10wt%. The titania-based portion of the catalyst article comprises Ce in an amount of 5 to 15wt%. The balance of the titania-based portion, together with the other optional components discussed below, is at least 60wt% Ti. That is, the majority of the composition is titania, on which various active metals have been provided, including at least Ce and Nb.

Preferably the ratio of Nb to Ce is from 1:1 to 1:5 by weight on an oxide basis, preferably 1:1.5 to 1:4. As demonstrated in the examples, the provision of Nb and Ce in these amounts and, in particular, in these ratios, gives rise to a catalyst article with equivalent or even better performance than a vanadium-containing catalyst, especially at high temperatures. Moreover, it has surprisingly been found that the high performance at high temperatures is associated with a very low selectivity to N₂O, especially when aged. This is a critical feature, since N₂O is an undesirable emission which will be regulated in future exhaust gas legislation.

The titania-based portion may comprise W. The W may be in an amount of 0 to 10wt%, preferably from 1 to 10wt%.

The titania-based portion may contain optional further elements including Fe in an amount of 0 to 5wt%, preferably from 1 to 5wt%; Zr in an amount of 0 to 5wt%, preferably from 1 to 5wt%; Si in an amount of 0 to 5wt%, preferably from 1 to 5wt%; La in an amount of 0 to 5wt%, preferably from 1 to 5wt%; Er in an amount of 0 to 5wt%, preferably from 1 to 5wt%. These elements may be provided as additives when preparing the catalyst composition, or may be provided as prior dopants of the materials. For example, it is preferable that silicon is provided as a dopant of the titania used to form the composition. Silicon is a particularly favoured dopant for improving thermal stability.

The filler portion comprises and preferably consists of fillers. These are present in an amount of 1 to 20wt%. Preferably the fillers are present in an amount of 5 to 15wt%. These fillers, also known as binders or processing aids, are generally catalytically inert materials included to facilitate extrusion processing. Preferably the fillers comprise inorganic fibers, preferably glass fibers, and/or clay. In addition to facilitating the extrusion step fillers can form sinter bridges during calcination to give the extrudate structural integrity.

Suitable clays include fullers earth, sepiolite, hectorite, a smectite, a kaolin and mixtures of any two or more thereof, wherein the kaolin can be chosen from sub-bentonite, anauxite, halloysite, kaolinite, dickite, nacrite and mixtures of any two of more thereof; the smectite can be selected from the group consisting of montmorillonite, nontronite, vermiculite, saponite and mixtures of any two or more thereof; and the fullers earth can be montmorillonite or palygorskite (attapulgite).

The inorganic fibres can be selected from the group consisting of carbon fibres, glass fibres, metal fibres, boron fibres, alumina fibres, silica fibres, silica-alumina fibres, silicon carbide fibres, potassium titanate fibres, aluminium borate fibres and ceramic fibres. Inorganic fibres can improve the mechanical robustness of the calcined product for use in the preferred automotive applications and during "canning" of the calcined product for use in an automotive exhaust system.

Organic auxiliary agents may also be used to improve processing or to introduce desirable attributes to the final solid catalyst body but are burnt out during the calcination step. Such materials can improve processing plasticity and/or introduce porosity in the solid catalyst body. Organic auxiliary agents suitable for use may comprise at least one of acrylic fibres (extrusion aid and pore former), a cellulose derivative (plasticizer and/or drying aid), other organic plasticizers (e.g. polyvinyl alcohol (PVA) or polyethylene oxide (PEO)), a lubricant (extrusion aid) and a water-soluble resin.

The catalyst article may optionally comprises a zeolitic portion. The zeolitic portion, when present, comprises one or more zeolitic SCR components in an amount of up to 20wt%. Preferably the article does not comprise these components. Nonetheless, it is an advantage of the composition that it can contain these other known SCR components.

Zeolites are crystalline materials having rather uniform pore sizes which, depending upon the type of zeolite and the type and amount of cations included in the zeolite lattice, range from about 3 to about 10 Angstroms in diameter. Certain zeolites having 8-ring pore openings and double-six ring secondary building units, particularly those having cage-like structures, have been used as SCR catalysts. A specific type of zeolite having these properties is chabazite (CHA), which is a small pore zeolite with 8 member-ring pore openings (~3.8 Angstroms) accessible through its 3-dimensional porosity. A cage-like structure results from the connection of double six-ring building units by 4 rings.

Metal-promoted zeolite catalysts also often referred to as ion-exchanged zeolites or zeolites supported with copper and/or iron including, among others, copper-promoted and iron-promoted zeolite catalysts. These are known for the use in the selective catalytic reduction of nitrogen oxides with ammonia and can typically be prepared via metal ion-exchange processes. For example, iron-promoted zeolite beta has been an effective commercial catalyst for the selective reduction of nitrogen oxides with ammonia. Copper promoted chabazites are also a preferred zeolite.

The titania-based portion is separately considered from the filler portion and optional zeolitic portion. That is, while they may be provided in an intimate mixture, amounts of the optional elements present in the filler or zeolitic portions are not counted against those provided in the titania-based portion. That is, where it is indicated that silicon may be present, this is distinct from the silicon which may be present in a glass fiber or a zeolitic material (such as a silica-aluminate). This is because the elements in the fillers are catalytically inert, compared to the active provision of those elements on the titania support in the titania-based portion.

Preferably the article consists of fillers and oxides of Nb, Ce, W, Ti and, optionally Si.

According to a further aspect, there is provided a method for the manufacture of the SCR catalyst article discussed herein, wherein the method comprises:
forming a mixture comprising a paste of optionally-doped titania, and one or more salts of at least Nb and Ce, together with fillers;
extruding the mixture to form a catalyst article precursor;
calcining the catalyst article precursor to form the SCR catalyst article.

The mixture is referred to herein as a paste. The paste will typically have a solids content in excess of 50wt% and more preferably in the range of 60 to 90% and most preferably 70 to 80wt%. These high levels of solids are optimal for extrusion processes, since the mixture is extrudable with a minimum amount of water removal required. The balance of the paste will be a solvent, preferably an aqueous solvent, and most preferably water. The solvent is removed in the drying/calcining steps.

Methods for extruding SCR catalyst articles are well known in the art. The catalytically active component is included in an extrusion composition whose rheological properties have been set so as to be suitable for the extrusion process. This extrusion composition is a plastic (i.e. easily shaped or mouldable), viscous composition. To set the desired rheological properties of the extrusion composition and also the mechanical properties of the extrudate, binders or additives are typically added to the extrusion composition. This plastic composition is then subjected to an extrusion process for preparing, for example, a honeycomb body. The so-called "green" body thus obtained is then subjected to a high temperature calcination treatment to form the finished extruded catalyst body. Before calcining there may be an optional drying step. Drying of the shaped article may be carried out, via standard techniques, including freeze drying and microwave drying (for example, see WO2009/080155).

Organic auxiliary agents may be used to improve processing or to introduce desirable attributes to the final solid catalyst body but are burnt out during the calcination step. Such materials can improve processing plasticity and/or introduce porosity in the solid catalyst body. Organic auxiliary agents suitable for use in step (a) of the first aspect may comprise at least one of acrylic fibres (extrusion aid and pore former), a cellulose derivative (plasticizer and/or drying aid), other organic plasticizers (e.g. polyvinyl alcohol (PVA) or polyethylene oxide (PEO)), a lubricant (extrusion aid) and a water-soluble resin.

The additional elements in the titania-based portion are provided either as part of a pre-doped titania particle, or as salts or oxides. At least the Nb and Ce are provided as salts or oxides. Suitable salts include, for example, niobium oxalate, cerium acetate, cerium carbonate and cerium nitrate. W can be added on the Titania or as Ammonium meta Tungstate. Zr may be added as Zirconium acetate, Si as silica sol, Er as Erbium nitrate, and La as Lanthanum acetate.

As discussed above, there is also provided a selective catalytic reduction (SCR) catalyst article comprising a substrate having a vanadium-free titania-based washcoat layer thereon. The washcoat layer comprises the same components as the extruded version, but there is no need for fillers to facilitate the extrusion step and/or to form sinter bridges during calcination to give the extrudate structural integrity. Instead, the washcoat will contain one or more binders. Suitable binders are well known in the art and include, for example, a Si-sol, a Zr sol or a Ti-sol.

In more detail, the binder component selected from alumina, alumina precursors (such as boehmite and/or bayerite), aluminium hydroxide, TiO₂, SiO₂, ZrO₂, CeZrO₂, SnO₂, an aluminophosphate, non-zeolitic aluminosilicate, silica-alumina, clays or mixtures thereof. The binder may be present in the slurry in an amount in the range 5 to 15 wt. %, preferably 8 to 12.5 wt.%, for example 10 to 12.5 wt.% based on total weight of the slurry.

The components may further include a rheology modifier and/or further include organic additives, such as pore formers, surfactants, and/or dispersants as processing aids. The rheology modifier may be selected from a polysaccharide, a starch, a cellulose, an alginate, or mixtures thereof. The rheology modifier may be present in the slurry in an amount of up to 0.4 wt%, preferably ≤ 0.2 wt.%. These components are removed in the calcining step.

Preferably the washcoat consists of oxides of Nb, Ce, W, Ti and, optionally Si.

As demonstrated in the examples, the catalyst composition has equivalent or better performance than a vanadium-containing catalyst at high temperatures. Accordingly, this type of catalyst could be advantageously used as a front layer on an SCR component as a high temperature quick reacting zone. Downstream of this front layer could be provided a conventional SCR composition, such as a Cu or Fe Zeolite, or even a conventional V-SCR (although this would be less preferred). Accordingly, when applying the composition as a washcoat, preferably the composition is provided as an inlet coating, preferably extending up to 60% of a length of the substrate extending from the inlet end, more preferably from 10 to 50% or 15 to 25% thereof.

For the avoidance of doubt, the inlet end is the upstream end of the catalyst when arranged in an exhaust system which receives the gases to be treated. The outlet end is the downstream end of the catalyst which releases the treated gases.

According to a further aspect there is provided a method for the manufacture of the SCR catalyst article having a vanadium-free titania-based washcoat layer thereon as described herein, wherein the method comprises:
providing a substrate for a catalyst article;
forming a washcoat composition comprising optionally-doped titania, and one or more salts of at least Nb and Ce;
washcoating the composition onto the substrate to form a catalyst article precursor;
calcining the catalyst article precursor to form the SCR catalyst article.

Washcoating techniques are well known in the art. When providing a washcoat, the substrate can be a metal flow-through substrate, a ceramic flow-through substrate, a wall-flow filter, a sintered metal filter or a partial filter. A preferred catalyst article is in the form of an extruded substrate, preferably a honeycomb monolith. Preferably the substrate is a porous honeycomb substrate.

According to a further aspect there is provided an exhaust system for the treatment of an exhaust gas, the system comprising the SCR catalyst article as described herein (washcoated or extruded), and, optionally, means for injecting a nitrogenous reductant arranged upstream of said article.

The following are the most preferred embodiments of the SCR catalyst articles described herein. The following embodiments may be further combined with all of the further features described herein as optional or preferred.

A most preferred extruded catalyst article comprises
a titania-based portion and a filler portion, wherein:
(a) the titania-based portion comprises (preferably consists of) the following elements on an oxide basis, based on the weight of the substrate:
   (i) Nb in an amount of 2 to 6wt%;
   (ii) Ce in an amount of 8 to 12wt%, preferably about 10wt%;
   (iii) W in an amount of 7 to 9wt%, preferably about 8wt%;
   wherein the balance is at least 60wt% Ti, the titania-based portion preferably comprising no Si or at least less than 0.1wt% Si;
(b) the filler portion is in an amount of 5 to 15wt%, based on the weight of the substrate. Preferably there is no zeolitic portion in this extruded article.

Reference to the titania-based portion consisting of the listed elements does not exclude the associated oxygen atoms. Furthermore, it should be appreciated that the portion may further comprises unavoidable impurities in the form of contaminant elements.

A most preferred washcoated catalyst article comprises a titania-based portion and a binder portion, wherein:
(a) the titania-based portion comprises (preferably consists of) the following elements on an oxide basis, based on the weight of the substrate:
   (i) Nb in an amount of 2 to 6wt%;
   (ii) Ce in an amount of 8 to 12wt%, preferably about 10wt%;
   (iii) W in an amount of 7 to 9wt%, preferably about 8wt%;
   wherein the balance is at least 60wt% Ti, the titania-based portion preferably comprising no Si or at least less than 0.1wt% Si;
(b) the binder portion is in an amount of 5 to 15wt%, based on the weight of the substrate. Preferably there is no zeolitic portion in this extruded article.

It is noted that washcoated articles are most preferred since they are the most straight-forward to introduce and permit the combination of the washcoat with other known catalyst formulations.

### Figures

The invention will now be described further in relation to the following non-limiting figures, in which:

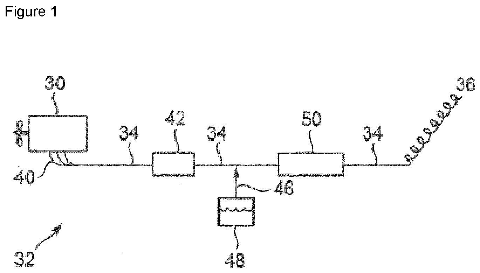

Figure 1 shows an exhaust system comprising a catalyst article as described herein.

Figure 1 shows a diesel combustion and exhaust gas treatment system 32. The system 32 comprises a diesel engine 30 having a manifold 40 for passing exhaust gas from the diesel engine 30 into an exhaust gas duct 34.

The exhaust gas duct 34 conveys the exhaust gas firstly to a DOC 42, secondly to an SCR catalyst article 50 as described herein, and finally the treated exhaust gas is released to the atmosphere 36. Before the exhaust gas enters the SCR catalyst article 50 it is dosed with ammonia 48 from an ammonia dosing spray 46.

The SCR catalyst article 50 may be an extruded catalyst article or a washcoated catalyst article as described herein.

### Examples

The invention will now be described further in relation to the following non-limiting examples.

### 1. Making an extruded catalyst

Extruded catalyst samples were prepared according to the following process. Powdered titania, niobium oxalate, cerium acetate, and, where employed, tungsten oxide were combined with clay minerals and glass fibres and then cellulose, a plasticizer/extrusion aid (for example, Zusoplast, a mixture of oleic acid, glycols, acids and alcohols - a brand name of Zschimmer & Schwarz GmbH & Co KG) and a polyethylene oxide (Alkox^{®} PEO) at room temperature to form a mouldable paste. The solids content of the paste was set such that its rheological properties were suitable for extrusion. The quantitative proportions of the starting materials were selected such that the final solid catalyst body contained the weight percentages of titania, ceria, niobia, and tungsten oxide indicated in the Tables below.

The mouldable paste was extruded at 20°C into a flow-through honeycomb having a circular cross-section of 1 inch diameter and a cell density of 400 cpsi (cells per square inch). The extruded honeycomb was freeze dried for several hours at 2mbar according to the method described in WO 2009/080155 and then calcined at a temperature of 500-650°C in a lab scale muffle oven to form a solid catalyst body.

### 2. Investigating performance

A number of extruded SCR catalyst article samples were produced according to the method described above. These were then tested for NOx conversion and N₂O production under different temperatures and against a standard vanadium-containing extruded article (VTiW) in a synthetic catalytic activity test (SCAT) apparatus. The tests were performed both on fresh and aged catalyst samples.

Testing for the NOx performance was performed with a standardised gas mixture containing 300ppm NO, 300ppm NH₃, 9.3% O₂, 7.0% H₂O and the balance nitrogen at a space velocity of 120000h⁻¹.

The aging conditions were 100 hrs at 580°C in air.

In the below tables, the numbers preceding each element represent the quantities (wt%) of that element, on an oxide basis, based on the total weight of the extruded catalyst sample (the balance being filler components). The parentheses in the examples linking the titania to certain elements denotes that these were pre-doped onto the titania.

**Table 1**

| | NOx conversion (%) fresh / aged | | | |
|---|---|---|---|---|
| Sample | 180°C | 250°C | 400°C | 500°C |
| VTiW | 14/13 | 55/54 | 84/86 | 80/74 |
| 82.0Ti/2.75Nb/5.0Ce | 2/3 | 10/9 | 75/55 | 82/68 |
| (73.8Ti/8.2W)/2.75Nb/5.0Ce | 2/3 | 14/17 | 78/72 | 83/76 |
| (73.8Ti/4.1W/4.1Si)//2.75Nb/5.0Ce | 2/4 | 13/16 | 74/64 | 75/68 |

This data demonstrates that the catalysts disclosed herein can have similar NOx performance at high temperatures, compared to conventional V-containing catalysts. The data further confirms that the presence of W stabilises the catalyst for high temperature performance after aging.

Surprisingly, since Si is often added as a stabiliser for titania, it was found that the addition of silica reduced stability and lessened performance. Preferably the titania-based portion does not contain silica.

**Table 2**

| | NOx conversion (%) fresh / aged | | | |
|---|---|---|---|---|
| Sample | 180°C | 250°C | 400°C | 500°C |
| VTiW | 14/13 | 55/54 | 84/86 | 80/74 |
| 82.0Ti/2.75Nb/5.0Ce | 2/3 | 10/9 | 75/55 | 82/68 |
| 77.0Ti/2.75Nb/10.0Ce | 4/2 | 11/8 | 75/55 | 83/70 |
| 65.0Ti/8.6Nb/13.0Ce | 2/3 | 10/14 | 58/57 | 65/67 |

This data demonstrates that the addition of Ceria is effective across a range from at least 5 to 15wt%. Nonetheless, addition of increasing amounts does not give significantly better performance, so lower levels may be more cost-effective. The data also suggests that high levels of Nb may be less desirable.

**Table 3**

| | NOx conversion (%) fresh / aged | | | |
|---|---|---|---|---|
| Sample | 180°C | 250°C | 400°C | 500°C |
| VTiW | 14/13 | 55/54 | 84/86 | 80/74 |
| (73.8Ti/8.2W)/2.75Nb/5.0Ce | 2/3 | 14/17 | 78/72 | 83/76 |
| (69.3Ti/7.7W)/2.75Nb/10.0Ce | 3/3 | 20/18 | 87/85 | 88/90 |
| (66.6Ti/7.4W)/2.75Nb/13.0Ce | 3/3 | 17/16 | 76/78 | 78/81 |

This data confirms a sweet-spot of Ce around 10wt%, providing high temperature performance that exceeds that of the standard vanadium-containing alternatives.

**Table 4**

| | N₂O production (%) fresh / aged | | | |
|---|---|---|---|---|
| Sample | 180°C | 250°C | 400°C | 500°C |
| VTiW | 0/0 | 0/0 | 0/2 | 14/54 |
| (73.8Ti/8.2W)/2.75Nb/5.0Ce | 2/4 | 3/4 | 2/0 | 31/8 |
| (69.3Ti/7.7W)/2.75Nb/10.0Ce | 2/1 | 2/1 | 3/1 | 28/29 |
| (66.6Ti/7.4W)/2.75Nb/13.0Ce | 2/4 | 2/4 | 2/2 | 23/10 |

This data confirms that the aged N₂O production of all of the catalysts described herein is significantly better than that of the vanadium-containing standards.

**Table 5**

| | NOx conversion (%) fresh / aged | | | |
|---|---|---|---|---|
| Sample | 180°C | 250°C | 400°C | 500°C |
| VTiW | 14/13 | 55/54 | 84/86 | 80/74 |
| (69.3Ti/7.7W)/2.75Nb/10.0Ce | 3/3 | 20/18 | 87/85 | 88/90 |
| (68.5Ti/7.6W)/3.3Nb/10.0Ce | 3/3 | 19/18 | 86/79 | 87/81 |
| (67.5Ti/7.5Wj/4.0Nb/10.0Ce | 3/3 | 25/21 | 87/82 | 90/83 |
| (66.1Ti/7.3W)/6.0Nb/10.0Ce | 3/4 | 26/26 | 86/83 | 90/86 |
| (64.3Ti/7.1W)/8.0Nb/10.0Ce | 4/4 | 28/19 | 86/77 | 87/82 |

This data looks at the effect of changing the Nb content when at the optimum 10wt% Ce level. As can be seen, there is excellent performance across the range, including examples which exceed the performance of the standard. Again, since there is no improvement with increasing amounts of Nb, it may be more cost effective to work at the lower end. Indeed, the best performance is shown at 2.75Nb.

**Table 6**

| | N₂O production (%) fresh / aged | | | |
|---|---|---|---|---|
| Sample | 180°C | 250°C | 400°C | 500°C |
| VTiW | 0/0 | 0/0 | 0/2 | 14/54 |
| (69.3Ti/7.7W)/2.75Nb/10.0Ce | 2/1 | 2/1 | 3/1 | 28/29 |
| (68.5Ti/7.6W)/3.3Nb/10.0Ce | 1/3 | 2/3 | 3/2 | 37/12 |
| (67.5Ti/7.5W)/4.0Nb/10.0Ce | 1/3 | 2/3 | 2/3 | 34/10 |
| (66.1Ti/7.3W)/6.0Nb/10.0Ce | 1/3 | 2/3 | 2/2 | 26/13 |
| (64.3Ti/7.1W)/8.0Nb/10.0Ce | 1/2 | 2/3 | 3/1 | 32/5 |

This data looks at the effect of changing the Nb content when at the optimum 10wt% Ce level. As can be seen, there is excellent performance across the range when aged, including all examples having lower N₂O production than the standard. Here, higher levels of Nb give lower N2O production suggesting that higher amounts may be desirable.

The term "comprising" as used herein can be exchanged for the definitions "consisting essentially of" or "consisting of". The term "comprising" is intended to mean that the named elements are essential, but other elements may be added and still form a construct within the scope of the claim. The term "consisting essentially of" limits the scope of a claim to the specified materials or steps and those that do not materially affect the basic and novel characteristic(s) of the claimed invention. The term "consisting of" closes the claim to the inclusion of materials other than those recited except for impurities ordinarily associated therewith.

The foregoing detailed description has been provided by way of explanation and illustration, and is not intended to limit the scope of the appended claims. Many variations in the presently preferred embodiments illustrated herein will be apparent to one of ordinary skill in the art, and remain within the scope of the appended claims and their equivalents.

For the avoidance of doubt, the entire contents of all documents acknowledged herein are incorporated herein by reference.

## Claims

1. A selective catalytic reduction (SCR) catalyst article comprising a vanadium-free extruded titania substrate comprising:
a titania-based portion, a filler portion and, optionally, a zeolitic portion, wherein:
(a) the titania-based portion comprises the following elements on an oxide basis, based on the weight of the substrate:
(i) Nb in an amount of 1 to 10wt%;
(ii) Ce in an amount of 5 to 15wt%;
(iii) W in an amount of 0 to 10wt%, preferably from 1 to 10wt%;
and, optionally,
(iv) Fe in an amount of 0 to 5wt%, preferably from 1 to 5wt%;
(v) Zr in an amount of 0 to 5wt%, preferably from 1 to 5wt%;
(vi) Si in an amount of 0 to 5wt%, preferably from 1 to 5wt%;
(vii) La in an amount of 0 to 5wt%, preferably from 1 to 5wt%;
(viii) Er in an amount of 0 to 5wt%, preferably from 1 to 5wt%;
(ix) Nd in an amount of 0 to 5wt%, preferably from 1 to 5wt%;
wherein the balance is at least 60wt% Ti;
(b) the filler portion is in an amount of 1 to 20wt%, based on the weight of the substrate, and
(c) the optional zeolitic portion comprises one or more zeolitic SCR components in a total amount of up to 20wt%, based on the weight of the substrate.

2. The SCR catalyst article according to claim 1, wherein the filler portion comprise glass fibers and/or clay.

3. The SCR catalyst article according to claim 1 or claim 2, wherein the filler portion is in an amount of 5 to 15wt%.

4. The SCR catalyst article according to any preceding claim, consisting of the titania-based portion and the filler portion.

5. The SCR catalyst article according to any preceding claim, wherein the titania-based portion consists of oxides of Nb, Ce, W, Ti and, optionally Si.

6. The SCR catalyst article according to any preceding claim, wherein the ratio of Nb to Ce is from 1:1 to 1:5 by weight on an oxide basis, preferably 1:2 to 1:3.

7. A method for the manufacture of the SCR catalyst article according to any preceding claim, wherein the method comprises:
forming a mixture comprising a paste of optionally-doped titania, and one or more salts of at least Nb and Ce, together with fillers;
extruding the mixture to form a catalyst article precursor;
calcining the catalyst article precursor to form the SCR catalyst article.

8. The method according to claim 7, wherein the titania is doped with silica.

9. A selective catalytic reduction (SCR) catalyst article comprising a substrate having a vanadium-free titania-based washcoat layer thereon, the washcoat layer comprising:
a titania-based portion, a binder portion and, optionally, a zeolitic portion, wherein:
(a) the titania-based portion comprises the following elements on an oxide basis, based on the weight of the washcoat:
(i) Nb in an amount of 1 to 10wt%;
(ii) Ce in an amount of 5 to 15wt%;
(iii) W in an amount of 0 to 10wt%, preferably from 1 to 10wt%;
and, optionally,
(iv) Fe in an amount of 0 to 5wt%, preferably from 1 to 5wt%;
(v) Zr in an amount of 0 to 5wt%, preferably from 1 to 5wt%;
(vi) Si in an amount of 0 to 5wt%, preferably from 1 to 5wt%;
(vii) La in an amount of 0 to 5wt%, preferably from 1 to 5wt%;
(viii) Er in an amount of 0 to 5wt%, preferably from 1 to 5wt%;
(ix) Nd in an amount of 0 to 5wt%, preferably from 1 to 5wt%;
wherein the balance is at least 60wt% Ti;
(b) the binder portion is in an amount of 1 to 20wt%, based on the weight of the washcoat, and
(c) the optional zeolitic portion comprises one or more zeolitic SCR components in a total amount of up to 20wt%, based on the weight of the washcoat.

10. The SCR catalyst article according to claim 9, consisting of the titania-based portion and the binder portion.

11. The SCR catalyst article according to claim 8 or claim 9, wherein the titania-based portion consists of oxides of Nb, Ce, W, Ti and, optionally Si.

12. A method for the manufacture of the SCR catalyst article according to any of claims 9 to 11, wherein the method comprises:
providing a substrate for a catalyst article;
forming a washcoat composition comprising optionally-doped titania, and one or more salts of at least Nb and Ce;
washcoating the composition onto the substrate to form a catalyst article precursor; calcining the catalyst article precursor to form the SCR catalyst article.

13. The method according to claim 12, wherein the substrate is a porous honeycomb substrate.

14. An exhaust system for the treatment of an exhaust gas, the system comprising the SCR catalyst article according to any of claims 1 to 6, or 9 to 11, and, optionally, means for injecting a nitrogenous reductant arranged upstream of said article.
